# EUROPEAN PATENT SPECIFICATION

(11) **EP 4 266 431 B1**
(45) Date of publication and mention of the grant of the patent: **02.04.2025**
(21) Application number: 22168818.7
(22) Date of filing: 19.04.2022
(51) Int. Cl.: H01M 8/021, H01M 8/0215, H01M 8/0228

(54) **METHOD, PRODUCT AND ARRANGEMENT INVOLVING DESPOSITED CORROSION ENHANCING LAYERS**
VERFAHREN, PRODUKT UND ANORDNUNG MIT ABGESCHIEDENEN KORROSIONSVERBESSERNDEN SCHICHTEN
PROCÉDÉ, PRODUIT ET AGENCEMENT IMPLIQUANT DES COUCHES DÉPOSÉES RENFORÇANT LA CORROSION

(43) Date of publication of application: 25.10.2023
(73) Proprietor: Interplex (Suzhou) Precision Engineering Ltd., Jiangsu Province 215021 (CN)
(72) Inventor: LJUNGCRANTZ, Henrik, 587 31 LINKÖPING (SE); LANGENDONK, Maarten, 5591 JT Heeze (NL)
(74) Representative: Bergenstråhle & Partners AB

(56) References cited:
- WO-A1-2022/013317
- WO-A2-2007/021679
- WU SIDA ET AL: "A review of modified metal bipolar plates for proton exchange membrane fuel cells", INTERNATIONAL JOURNAL OF HYDROGEN ENERGY, ELSEVIER, AMSTERDAM, NL, vol. 46, no. 12, 2 January 2021 (2021-01-02), pages 8672 - 8701, XP086484884, ISSN: 0360-3199, [retrieved on 20210102], DOI: 10.1016/J.IJHYDENE.2020.12.074
- LENG YU ET AL: "Stainless steel bipolar plates for proton exchange membrane fuel cells: Materials, flow channel design and forming processes", JOURNAL OF POWER SOURCES, ELSEVIER, AMSTERDAM, NL, vol. 451, 3 February 2020 (2020-02-03), XP086055274, ISSN: 0378-7753, [retrieved on 20200203], DOI: 10.1016/J.JPOWSOUR.2020.227783

## Description

### TECHNICAL FIELD

Embodiments herein concern deposited layers for corrosion enhancement, more particularly a method for enhancing corrosion resistance of a fuel cell bipolar plate, "BPP", sheet, such BPP sheet, and an arrangement for enhancing the corrosion resistance.

### BACKGROUND

Fuel cells offer an environmental friendly way of transforming stored energy in the form av hydrogen to electrical energy and is seen as an important technology in the shift from fossil fuel engines to electric ones. A critical factor in many of today's advanced fuel cells is to be able to produce high-volume, high-quality production of bipolar plates (BPPs) for fuels cells, such as for Proton Exchange Membrane Fuel Cells (PEMFCs) and Direct Methanol Fuel Cells (DMFC).

For example, in a PEMFC multiple BPPs are typically employed with a Membrane Electrolyte Assembly (MEA) between each BPP, such that the combination provides an desired level of electrical energy production, similar to the way that cells of a battery collectively combine to deliver an output voltage level.

Components that are part of a BPP comprise e.g. BPP sheets formed from a sheet of substrate material of stainless steel. Stainless steel is preferred for manufacturing and cost reasons. There is a first, or anode, BPP sheet, that is attached to a second, or cathode, BPP sheet, e.g. by laser welding, with a welding seam between. The sheets are form fitted to each other such that e.g. BPP flow channels are formed when the BPP sheets are attached to each other. Each sheet is formed from, e.g. by stamping of, the sheet of substrate material whereby the BPP sheet is provided with structures that e.g. form said BPP flow channels. In the prior art, on the outside of the BPP, on both anode and cathode side, there has been provided a coating, e.g. by PVD, to enhance corrosion resistance and to lower and/or maintain low contact resistance of the stainless steel substrate. Titanium carbide, TiC, deposited by Physical Vapor Deposition (PVD) is an example of a predominant coating material but the prior art proposes also other metal carbides or nitrides with or without further alloying elements. Examples for such BPP sheets can be found in patent documents WO 2022/013317 A1 and WO 2007/021679 A2, as well as non patent documents WU SIDA ET AL: "A review of modified metal bipolar plates for proton exchange membrane fuel cells", INTERNATIONAL JOURNAL OF HYDROGEN ENERGY, ELSEVIER, AMSTERDAM, NL, vol. 46, no. 12, 2 January 2021, pages 8672-8701 and LENG YU ET AL: "Stainless steel bipolar plates for proton exchange membrane fuel cells: Materials, flow channel design and forming processes", JOURNAL OF POWER SOURCES, ELSEVIER, AMSTERDAM, NL, vol. 451, 3 February 2020.

On outside of the BPP, both on anode and cathode sides, there are provided gaskets, by gasket overmolding, so that several BPPs with MEA between each pair thereby can form sealed cells.

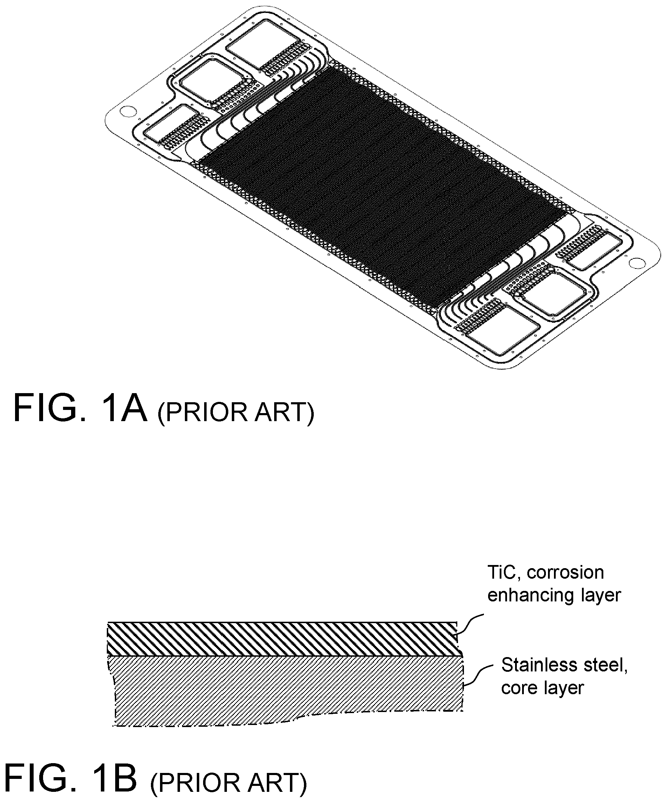

Figure 1A shows a top view of a BPP sheet that may be a coated prior art BPP sheet as mentioned above.

Figure 1B schematically shows part of a cross section of the BPP sheet in Figure 1A, with the substrate material corresponding to an inner, core layer, and said coating thereon corresponding to a corrosion enhancing layer.

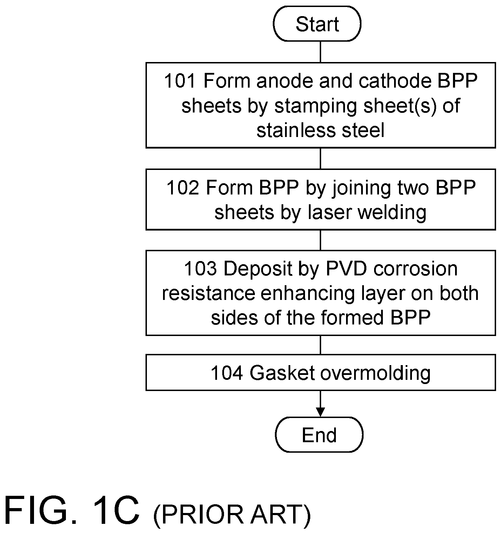

Figure 1C is a flow chart briefly describing an example of conventional manufacturing steps of such prior art BPP sheet as mentioned above, that is: An action 101 where anode and cathode BPP sheets are formed by stamping sheet(s) of stainless steel. An action 102 where the BPP is formed by joining the two BPP sheets by laser welding. An action 103 where it is deposited by PVD a corrosion resistance enhancing layer on each side of the formed BPP. An action 104 with gasket overmolding on the formed BPP.

In a fuel cell, oxygen and hydrogen form electricity with water as waste product. During usage and/or storage of the fuel cell, the water contains hydrogen ions, i.e. protons, and the water typically have a low pH of around 3. If it comes in contact with the stainless steel, the acid reacts with it and creates an surface oxide, i.e. there is an oxidation. The surface oxide will increase the contact resistance. For example, a 100 kW stack can have 200-400 BPP and the current will flow throw all plates and an increased contact resistance can result in a significant energy loss, e.g. 20 %. Additionally, exposure to acid makes the stainless steel releases iron and other stainless-steel ions. Those ions degenerate the function of the fuel cell. It is mainly the membrane and catalyst material that takes damage with deteriorated functionality. The life time of the fuel cell is thereby also significantly reduced. Said coating on the stainless steel reduces this kind of corrosion issues, protecting the core layer of stainless steel from direct contact with the acid, the precoat itself having much higher corrosion resistance. However, in practice there will still be some corrosion, although reduced, even in the presence of the coating, and that negatively affects the fuel cell life time, efficiency and/or function.

Also, as indicated above, metal BPP sheets, such as stainless steel, are often chosen for cost and/or manufacturing reasons instead of e.g. graphite/graphite composites, although the latter have much higher corrosion resistance. Stainless steel corresponding to materials SUS 316L or SUS 304L is likely the most common material used today. However, it would be advantageous if even less expensive stainless-steel materials, such as SUS 301 or alloys with even lower amount of alloying elements, e.g., Ni, could be used instead, since this would mean even lower manufacturing costs. However, a problem with such materials are their even lower corrosion resistance, even when a conventional precoat is used.

### SUMMARY

In view of the above an object is to provide one or more improvements or alternatives to the prior art, such as enabling provision of BPP sheets, e.g. based on a stainless steel substrate, with enhanced corrosion resistance.

According to a first aspect of embodiments herein, the object is achieved by a method for enhancing corrosion resistance of a fuel cell bipolar plate (BPP) sheet according to claim 1. The fuel cell BPP sheet has a core layer made from a metal substrate material and one or more first corrosion resistance enhancing layers deposited thereon. The method comprises to deposit at least one second corrosion resistance enhancing layer on said first corrosion enhancing layers. The second corrosion enhancing layer having a SiOxCzHw composition and a thickness in a range 1-500 nm.

According to a second aspect of embodiments herein, the object is achieved by a fuel cell BPP sheet having a core layer made from a metal substrate material according to claim 6. The fuel cell BPP sheet has one or more first corrosion resistance enhancing layers deposited thereon. At least one second corrosion resistance enhancing layer is deposited on said first corrosion enhancing layers. The second corrosion enhancing layer having a SiOxCzHw composition and a thickness in a range 1-500 nm.

According to a third aspect of embodiments herein, the object is achieved by an arrangement for enhancing corrosion resistance of a fuel cell BPP sheet according to claim 9. The fuel cell BPP sheet having a core layer made from a metal substrate material and one or more first corrosion resistance enhancing layers deposited thereon. The arrangement is configured to deposit at least one second corrosion resistance enhancing layer on said first corrosion enhancing layers. The second corrosion enhancing layer having a SiOxCzHw composition and a thickness in a range 1-500 nm.

Embodiments herein is relate to enhanced corrosion resistance of a fuel cell BPP sheet and may be particularly advantageous if combined with stamping as the means for forming the BPP sheet. However, the forming may alternatively be made by other means, e.g. by means of hydroforming, i.e. using high pressure of liquid, or by means of hot or cold rolling. Also other conventional methods are possible to use with embodiments herein.

### BRIEF DESCRIPTION OF THE DRAWINGS

Examples of embodiments herein are described in more detail with reference to the appended schematic drawings, which are briefly described in the following.
Figure 1A schematically shows a top view of a BPP sheet.
Figure 1B schematically shows part of a cross section of the BPP sheet in Figure 1A.
Figure 1C is a flow chart briefly describing production steps of such prior art BPP sheet as mentioned above.
Figure 2A schematically shows a BPP sheet with a precoat and a further corrosion enhancing layer thereon according to some embodiments herein.
Figure 2B schematically shows part of a cross section of the BPP sheet of Figure 2A.
Figure 3 is a flow chart schematically illustrating actions of a production method for accomplishing a BPP sheet according to some embodiments herein.
Figure 4 is a flowchart schematically illustrating embodiments of a method according to embodiments herein.
Figure 5 is a functional block diagram for illustrating embodiments of one or more devices according to embodiments herein and how such can be configured to carry out the method and actions described in relation to Figure 4.

### DETAILED DESCRIPTION

Embodiments herein are exemplary embodiments. It should be noted that these embodiments are not necessarily mutually exclusive. Components from one embodiment may be tacitly assumed to be present in another embodiment and it will be obvious to a person skilled in the art how those components may be used in the other exemplary embodiments.

As a development towards embodiments herein the problem indicated in the Background will first be further elaborated upon.

Embodiments herein are based on investigations and performed experiments i.a. based on BPPs and BPP sheets as mentioned in the Background and similar.

Such prior art coating as mentioned in the Background to enhance corrosion resistance may be applied with different methods, i.e., spray coating, ablation coating, dipping, wet plating, electro plating, screen printing, tamping printing. The most common method today is Physical Vapor Deposition (PVD), but also Chemical Vapor Deposition (CVD) and plasma assisted CVD (PA-CVD) are common.

With PVD, coatings may be based on carbides or nitrides of Titanium (Ti), Zirconium (Zr), Hafnium (Hf), Vanadium (V), Niobium (Nb), Tantalum (Ta), Chromium (Cr), Molybdenum (Mo), Tungsten (W), Manganese (Mn), Technetium (Tc).. Also other alloying elements such as Oxygen (O), Boron (B), Silicon (Si), Germanium (Ge), Phosphorus (P), Sulfur (S) can be used stabilize and improve the contact resistance and improve corrosive resistance.

Coatings of this kind have been found to decrease corrosion and increase lifetime but some corrosion still accrues and at undesirable levels. It has been found to be mainly open areas, crack in the coating, voids or pinholes that create the problematic corrosion. This has been found to particularly be a problem if a precoated coating is used, i.e. when the coating for increased corrosion resistance is coated on a sheet of the substrate material, e.g. stainless steel, that the BPP sheet thereafter is formed from, and in particular when it is formed by stamping. Said cracks, voids and/or pinholes in the coating exposes the stainless steel that corrodes when exposed to the acid, causing such problems as mentioned in the Background.

However, it is still desirable, if possible, to use a precoated substrate material since it is also associated with several advantages, e.g. cost efficiency and simplification of manufacturing. Stamping is also desirable to be able to use, e.g. since it is an efficient method, well suitable for production environment and for forming the structures of the BPP sheet.

Further, a BPP cell voltage is typically about 0.7 volt but can vary from 0.6 - 1.4 V depending on how the fuel cell is operated. In any case, this voltage accelerates the corrosion of the BPP sheets involved in the cell and further reduces the lifespan.

Indication of lifespan of a fuel cell based on BPPs can be simulated in a corrosion cell. Following the USA Department of Energy (DOE) specification of corrosion tests in corrosion cells, a DOE potentiostatic test at 0.60 V vs Ag/AgCl pH 3, 80 °C, 0.1 ppm F may be performed. A typical PVD coating as above has a corrosion that may correspond to 30-50 nA/cm² after 24h. However, if the PVD coating has been precoated, i.e. coated before stamping that forms the structures of the BPP sheet, this causes increased cracking of the coating and that exposes the stainless steel, i.e. substrate material, as mentioned above. This has been found to increase corrosion further, to about 50-100 nA/cm² after 24 h.

Hence, a conventional coating has been found to cause problems with the lifespan, and especially when a precoated substate material sheet is used. A BPP may need a lifespan of at least 7000-20 000 h, although exact requirements depend on application area. However, such lifespan has been found difficult to achieve with a conventional precoated stainless steel based BPP sheet.

The inventors found that a thin top coating of a few nm deposited on the precoat layer after the stamping improved the corrosion resistance, likely due to an ability to seal defects in the coating, e.g. cracks from the stamping. The thin top coating also had no substantial influence on the contact resistance of the BPP. The top coating further decreased the corrosion, a lifespan in the range of 7.000-20.000 h was enabled and corrosion current as low as in the range 2-5 nA/cm2 after 24h was accomplished.

Said top coating should be a siloxane coating deposited preferable with a PA-CVD process, and the resulting coating should have a SiOxCzHw composition, with x, z, w > 0, i.e, a composition of Silicon, Oxygen, Carbon and Hydrogen.

Embodiments herein will now be described in some further detail.

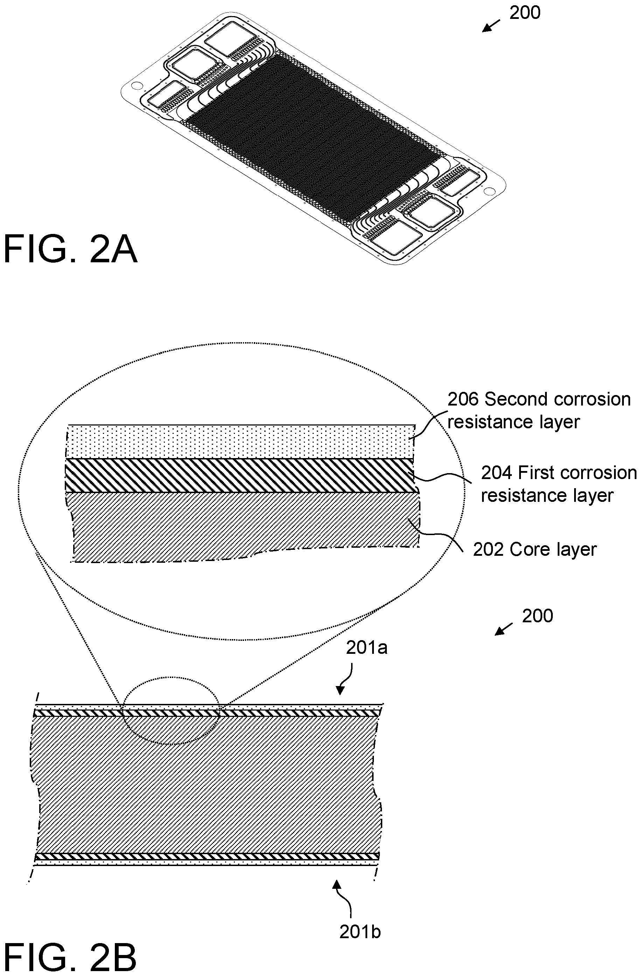

Figures 2A-B schematically show a fuel cell BPP sheet 200 with a core layer 202, a first corrosion enhancing layer 204, e.g. corresponding to the above precoating or conventional coating, and thereon a further, second corrosion enhancing layer 206 according to some embodiments herein. The second corrosion enhancing layer 206 may thus correspond to said top coating. More specifically, Figure 2A schematically shows a planar view of the BPP sheet 200 and Figure 2B schematically shows part of a cross section of the BPP sheet 200 of Figure 2A, where said layers are visible. As should be realized, the BPP sheet 200 may be used to replace a prior art BPP sheet, e.g. such as discussed in the Background and thereby increase corrosion resistance and lifespan of fuel cell using a BPP based on the BPP sheet 200. BPP sheets according to embodiment herein may e.g. replace prior art anode and cathode BPP sheets as mentioned above in relation to Figures 1A-C and may thus be used as BPP anode and/or cathode sheets.

As shown in Figure 2B, the BPP sheet has two major surfaces 201a, 201b, or sides. The first corrosion resistance enhancing layer is provided on a corresponding major surface of the core layer, and the second corrosion resistance enhancing layer is provided on the first corrosion enhancing layer. As can be seen, the layers are preferably provided on both sides, or major surfaces 201a, b, and should, just as a conventional first corrosion resistance enhancing layer, cover, e.g., by being coated over, the whole core layer surface but at least parts and/or potions that will be subject to the corrosive, e.g. acid, environment during operation of the fuels cell that the BPP sheet shall be part of. It may be realized that the coting of opposite sides of a sheet are subject to different environments, one will face the "inside" or "water side" of the BPP when two BBP sheets has been joined, which side may seem less relevant to cover with the corrosion resistance enhancing layers, but it has been found advantageous to cover also this side, in particular for contact resistance reasons.

As already indicated above, the second corrosion enhancing layer 206 thus have a SiOxCzHw composition with x, z, w > 0. The thickness is in a range 1-500 nm. Thicker layers than this may not increase corrosion resistance in any useful way, but may cause undesirable high contact resistance. Typically there are no reason to increase thickness above 100 nm. Even a thin layer as 1 nm has some effect. What exact thickness is best for a certain BPP sheet in a practical situation is difficult to say since it may depend on the specific materials used, coating method(s) and/or structures, e.g. structures created by stamping, on the BPP sheet. A way to find a suitable thickness in a practical situation may be to produce and test a BPP sheet with a thin, e.g. 1 nm, second corrosion resistance enhancing layer and then if needed to accomplish sufficient improvement, thicker layers may be produced and tested until the corrosion resistance enhancement is sufficient.

Note that the second corrosion resistance enhancing layer 206 to some extent, at least at first, may negatively affect the contact resistance, but only insignificantly or within what is acceptable, but that the contact resistance then, during operation of the fuel cell comprising the BPP sheet, will stay sufficiently low for a longer time with embodiments herein compared to the conventional case with only a coating corresponding to the first corrosion resistance enhancing layer. In total the second corrosion resistance enhancing layer 206 should thus provide an insignificant contribution to the contact resistance and over time actually improve the contact resistance compared to a conventional case. For example, in experiments a second corrosion resistance enhancing layer of the above type has been found to be able to increase corrosion resistance and thereby lifespan to 7.000-20.000 h with a resulting corrosion current in the range 2-5 nA/cm2 after 24 h based on DOE standard corrosion tests as mentioned above, which is a clear improvement compared to when only a single conventional first corrosion resistance enhancing layer is used.

It should be noted that the second corrosion resistance enhancing layer 206 may be either hydrophobic or hydrophilic.

The first corrosion enhancing layer 204 may be a conventional corrosion enhancing layer, e.g. as used today on SUS based BPP sheets. Typically, the first corrosion enhancing layer comprises one or more of borides, carbides or nitrides of Ti, Zr, Hf, V, Nb, Ta, Cr, Mo, W, Mn, Tc, but where Ti and Cr may be predominant, e.g. TiC or CrC. It may also comprise other one or more alloying elements such as O, B, Si, Ge, P, S for stabilizing and/or improving contact resistance and/or to further improve corrosive resistance. In some embodiments it may comprise Iridium (Ir) or Ruthenium (Rh) as dopant. The first layer typically corresponds to a coating applied with any one of a number of methods, e.g. by spray coating, ablation coating, dipping, wet plating, electro plating, screen printing, tamping printing. The most common methods are Physical Vapor Deposition (PVD), Chemical Vapor Deposition (CVD) and plasma assisted CVD (PA CVD), where PVD may be predominant.

The first corrosion resistance layer may be in the range 30 nm-500 nm, typically about 100 nm.

As already mentioned above, the function of the first corrosion enhancing layer 204 is typically, in addition to increase corrosion resistance, to lower contact resistance compared to directly contacting the core layer, e.g. stainless steel.

Note that in some embodiments the first corrosion enhancing layer 204 is not a single layer but may be a multilayer, e.g. a conventional precoating as mentioned above with e.g. a diamond like carbon (DLC) layer coated thereon, to further enhance corrosion resistance and and/or contact resistance, but that still may suffer from imperfections such as cracks with negative impact that is taken care of by the second corrosion enhancing layer 206. Another example of the first corrosion enhancing layer 204 being a multilayer is when it comprises a noble metal layer despotised on the core layer 202, i.e. on its surface.

The core layer 202 is made from a metal substrate material, typically and advantageously stainless steel, i.e. SUS, as already indicated. The core layer may thus be considered to correspond to a substrate or substrate layer. In some embodiments, other metals substrate material than stainless steel is used, e.g. based on Ti or Inconel 625. Examples of stainless steel materials are stainless steel 1.4509, SUS 316L, SUS 304L, SUS 301.Intresting in general is SUS with low Ni content, which may be enabled for practical use thanks to embodiments herein and enhances corrosion enhancement. In some embodiments it may be used a more corrosion sensitive and less expensive SUS material than conventionally is used, such as SUS 301 or similar. This may be possible thanks to the corrosion enhancement provided by the second layer. The core layer is typically in the range 0.025-0.3 mm.

Hence, according to some embodiments herein there is provided a fuel cell BPP sheet, e.g. the BPP sheet 200, having a core layer, e.g. the core layer 201, made from a metal substrate material and having one or more first corrosion resistance enhancing layers, e.g. the first corrosion resistance enhancing layer 204, deposited thereon. At least one second corrosion resistance enhancing layer, e.g. the second corrosion resistance enhancing layer 206, is deposited on said first corrosion enhancing layers. The second corrosion enhancing layer 206 is having a SiOxCzHw composition with x, z, w > 0 and a thickness in a range 1-500 nm.

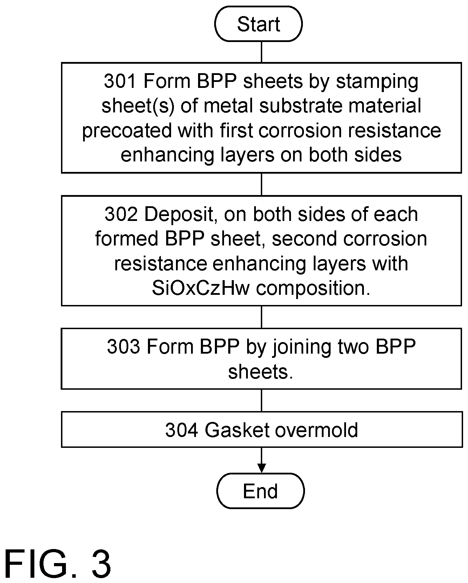

Figure 3 is a flow chart schematically illustrating actions of an exemplifying production method for accomplishing a BPP based on a BPP sheet according to embodiments herein, e.g. based on the BPP sheet 200.

The exemplary method may be for accomplishing the BPP with enhanced corrosion resistance compared to a prior BPP based on BPP sheets with only conventional corrosion resistance enhancing layer.

The method may be performed by a suitable arrangement, e.g. production system and/or one or more devices, that may correspond to adapted and/or adjusted conventional equipment used for producing prior art BPPs.

### Action 301

It is formed BPP sheets, each e.g. corresponding to BPP sheet 200, by e.g. stamping sheet(s) of metal substrate material precoated with first corrosion resistance enhancing layers, each e.g. corresponding to the first corrosion resistance enhancing layer 204, preferably on both sides. Typically there are two BPP sheets, one anode and one cathode sheet, formed for each BPP. The BPP sheets are configured to be joined and fit to each other, thereby forming a BPP with certain inside and outside structures for liquid and gas transport during operation of the fuel cell employing the BPP. The structures may be the same as for prior art BPPs and BPP sheets. Also, the formation, e.g. stamping, as such, may be conventional.

As already indicated above, embodiments herein may have particular advantages when combined with stamping as the means for forming the BPP sheet, however, forming may alternatively be made by other means, e.g. by means of hydroforming, i.e. using high pressure of liquid, or by means of hot or cold rolling. Also other conventional methods are possible to use.

This action may thus correspond to Action 101 but with e.g. the difference that the sheets of stainless steel are instead precoated sheets of stainless steel.

### Action 302

It is deposited, on each first corrosion resistance enhancing layer, e.g. 204, of each formed BPP sheet from Action 301, a second corrosion resistance enhancing layer with the SiOxCzHw composition with x, z, w > 0, e.g. corresponding to the second corrosion resistance enhancing layer 206. With the first corrosion enhancement layer on both sides of the BPP sheet, the present action should involve depositing the second deposition layer on both sides. At least both layers should be on the side to face outward on the BPP, i.e. the side that will be exposed to the most corrosive environment, and/or on all such surfaces of each BPP sheet, and/or simply on all surfaces with the first corrosion resistance enhancing layer.

The deposition is made by means of plasma assisted chemical vapor deposition, (PA CVD) with hexamethyldisiloxane (HMDSO) being used as process gas.

HDMSO has been found advantageous and efficient for accomplishing second corrosion resistance enhancing layers with the SiOxCzHw composition and makes it possible to affect or even control the control the SiOxCzHw composition to accomplish a desirable polymeric structure in relation to the first layer and in relation to for further process steps in manufacturing of a BPP based on the sheet. For example, it may be desirable with a dense polymeric structure and a relatively soft second layer such that a later added gas diffusion layer (GDL), e.g. a graphite in the form of a cloth, between sheets that during assembly of the BPP can be pressed through the second layer and come in direct contact with the first layer. The GDL as such may be as in prior art BPPs.

However, it should be noted that also other process gases can additionally be used to produce such second corrosion enhancing layer as described herein, e.g. process gases comprising any one of the following: trimethylsilan (TMS), 3FS, Serva-Silicon, (3-Aminopropyl)triethoxysilane (APTES).

The process gas preferably contains an oxygen (O2) to HDMSO ratio that is less than 6 to1 (6:1). This accomplishes a layer with particularly desirable properties and that is not too SiO like. See e.g. Surface and Coatings Technology 116-119 ( 1999) 1033-1036, www.elsevier.nl/locate/surfcoatDeposition of SiOxfilms from O2/HMDSO plasmas, D. Hegemann a, *, U. Vohrer a, C. Oehr a, R. Riede for further information on how the second corrosion resistance enhancing layer may be formed in some embodiments.

### Action 303

The BPP is formed by joining two BPP sheets from Action 302.

This action may correspond to Action 102 but with e.g. a difference that the BPP sheets here, preferably on both sides but at least the outside of the BPP, have the precoated first corrosion resistance enhancing layer 204 and thereon the deposited second corrosion resistance enhancing layer 206.

### Action 304

Gasket overmolding may then be performed on the BPP formed in Action 303.

This action may correspond to Action 104
This action, and also any further actions to complete the BPP and fuel cell that the BPP is to be used in, may be conventional.

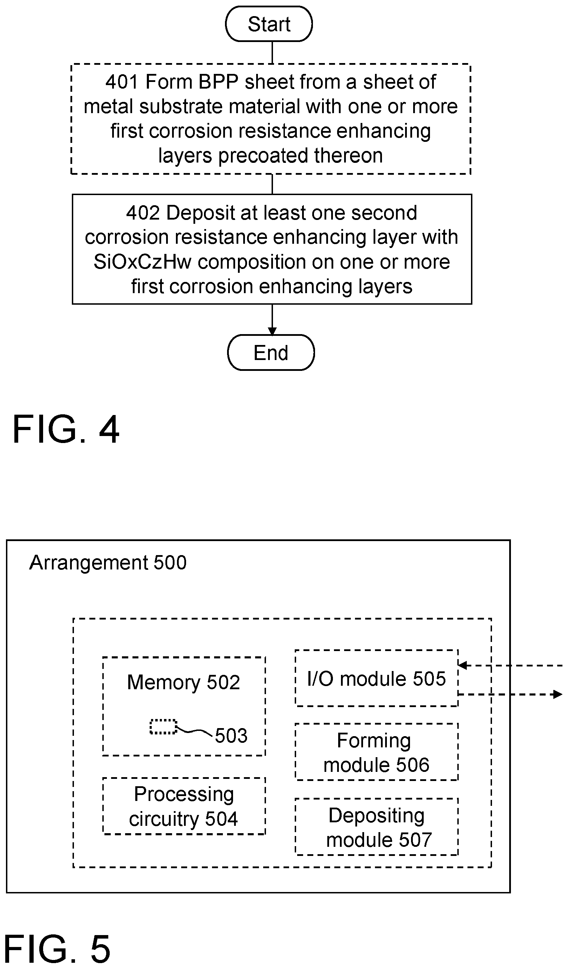

**Figure 4** is a flowchart schematically illustrating embodiments of a method according to embodiments herein.

The method is for enhancing corrosion resistance of a fuel cell BPP sheet, e.g. the BPP sheet 200, having a core layer, e.g. the core layer 202, made from a metal substrate material and having one or more first corrosion resistance enhancing layers, e.g. the first corrosion resistance enhancing layer 204, deposited thereon.

The core layer, first corrosion resistance enhancing layer(s) and BPP sheet may thus be as described above.

The method may be performed by a suitable arrangement, e.g. production system and/or one or more devices, for the deposition and that e.g. may be part of adapted and/or adjusted conventional equipment used for producing prior art BPPs.

### Action 401

The BPP sheet 200 may be formed from a sheet of said metal substrate material with said one or more first corrosion resistance enhancing layers 204 deposited thereon, i.e. formed from a precoated sheet of the metal substrate material.

This action may fully or partly correspond to Action 301 above.

As already indicated above, the corrosion resistance enhancing capabilities of the second corrosion resistance enhancement layer may be particularly efficient when a sheet of substrate material precoated with the first corrosion resistance enhancement layer is used and subject for forming of the BPP sheet, e.g. by stamping, since the forming has been found to introduce defects such as cracks in the first corrosion resistance enhancement layer that significantly decrease corrosion resistance. The second corrosion resistance enhancement layer has been found able to efficiently reduce impact from such defects. It may be more cost efficient and/or production efficient to use a precoated substate instead of depositing the first layer after forming of the BPP sheet or BPP.

### Action 402

It is deposited at least one second corrosion resistance enhancing layer, e.g. the second corrosion resistance enhancing layer 206, on said first corrosion enhancing layers. The second corrosion enhancing layer having the SiOxCzHw composition with x, z, w > 0 and a thickness in the range 1-500 nm.

As already indicated above, second corrosion resistance enhancing layer(s) of this kind has been found to be able to reduce impact from weaknesses, such as defects and imperfections, in the first corrosion resistance enhancing layer 204, e.g. cracks, voids and/or pinholes, that else heavily reduces corrosion resistance of the BPP sheet 200. This in addition to that that the second corrosion enhancing layer 206 of course also constitutes an extra layer. At the same time such second corrosion resistance enhancing layer has been found to initially contribute only to minor and/or acceptable amount to the contact resistance but that is over time results in a lower contact resistance compared to only having the first corrosion resistance layer.

Said second corrosion enhancing layer 206 is deposited by means of PA CVD with HMDSO being used as process gas. Preferably, the process gas contains an oxygen (O2) to HDMSO ratio that is less than 6 to1.

In some embodiments, the metal substrate material is stainless steel.

Further, in some embodiments, said first corrosion resistance enhancing layer(s) 204 comprise two first corrosion resistance enhancing layers deposited on the two major surfaces of the core layer 202, respectively. Said at least one second corrosion resistance enhancing layer 206 should then comprise two corrosion resistance enhancing layers deposited on said two first corrosion resistance enhancing layers, respectively.

When Action 401 is performed, this is thus prior to the present action with the deposition of the second corrosion enhancing layer 206.

The present action may fully or partly correspond to Action 302 above.

**Figure** 5 is a functional block diagram for illustrating embodiments of an arrangement 500 according to embodiments herein and how such can be configured to carry out the method and actions described in relation to Figure 4.

As indicated in the foregoing, the arrangement, e.g. production system and/or one or more devices, is for deposition of the second corrosion resistance enhancing layer, and may correspond to or be comprised in adapted and/or adjusted conventional equipment used for producing prior art BPP sheets, and may e.g. correspond to or include equipment for PA CVD.

Hence, said arrangement 500 is for enhancing corrosion resistance of the fuel cell BPP sheet 200 having the core layer 201 made from a metal substrate material and having said one or more first corrosion resistance enhancing layers 204 deposited thereon.

The arrangement 500 may comprise processing module(s) 501, such as a means, one or more hardware modules, including e.g. one or more processors, and/or one or more software modules for performing said method and/or actions. For example, a conventional equipment used for producing prior art BPP sheets, e.g. equipment for PA CVD, typically comprise and/or is controlled by a computer, and implementing said method and actions may then involve to configure and/or program this computer.

The arrangement 500 may thus further comprise memory 502 that may comprise, such as contain or store, computer program(s) 503. The computer program(s) 503 comprises 'instructions' or 'code' directly or indirectly executable by the arrangement 500 to perform said method and/or actions. The memory 502 may comprise one or more memory units and may further be arranged to store data, such as configurations and/or applications involved in or for performing functions and actions of embodiments herein.

Moreover, the arrangement 500 may comprise processor(s) 504, i.e. one or more processors, as exemplifying hardware module(s) and may comprise or correspond to one or more processing circuits. In some embodiments, the processing module(s) 501 may comprise, e.g. 'be embodied in the form of' or 'realized by' processor(s) 504. In these embodiments, the memory 502 may comprise the computer program 503 executable by the processor(s) 504, whereby the arrangement 500 is operative, or configured, to perform said method and/or actions thereof.

Typically the arrangement 500, e.g. the processing module(s) 501, comprises Input/Output (I/O) module(s) 505, configured to be involved in, e.g. by performing, any input, output and communication to and/or from other units and/or devices, such as receiving the BPP sheet prior to the deposition or the substrate material, processing gas, providing the BPP sheet after the deposition, and/or sending and/or receiving information to and/or from other devices etc. The I/O module(s) 505 may be exemplified by obtaining, e.g. receiving, module(s) and/or providing, e.g. sending, module(s), when applicable.

Further, in some embodiments, the arrangement 500, e.g. the processing module(s) 501, comprises one or more of **forming module(s) 506, depositing module(s) 507,** as exemplifying hardware and/or software module(s) for carrying out actions of embodiments herein. These modules may be fully or partly implemented by the processor(s) 504.

### Hence:

The arrangement 500, and/or the processing module(s) 501, and/or the processor(s) 504, and/or the I/O module(s) 505, and/or the forming module(s) 506 may be operative, or configured, to form, prior to the deposition of the second corrosion enhancing layer, the BPP sheet from the sheet of said metal substrate material with said one or more first corrosion resistance enhancing layers deposited thereon.

The arrangement 500, and/or the processing module(s) 501, and/or the processor(s) 504, and/or the I/O module(s) 505, and/or the depositing module(s) 507 may be operative, or configured, to deposit said at least one second corrosion resistance enhancing layer on said first corrosion enhancing layers.

It should be noted that any enumerating terminology used herein, such as first, second, etc., should as such be considered non-limiting and the terminology as such does not imply a certain hierarchical relation. Without any explicit information in the contrary, naming by enumeration should be considered merely a way of accomplishing different names.

As used herein, the expression "configured to" may mean that something is configured to, or adapted to, e.g. by means of software or hardware configuration, to perform one or more actions.

As used herein, the terms "number" or "value" may refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "may" and "in some embodiments" has typically been used to indicate that the features described may be combined with any other embodiment disclosed herein.

When using the word "comprise" or "comprising" it shall be interpreted as nonlimiting, i.e. meaning "consist at least of".

The embodiments herein are not limited to the above described embodiments. Various alternatives, modifications and equivalents may be used. Therefore, the above embodiments should not be taken as limiting the scope of the present disclosure, which is defined by the appending claims.

## Claims

1. Method for enhancing corrosion resistance of a fuel cell bipolar plate, "BPP", sheet (200) having a core layer (202) made from a metal substrate material and having one or more first corrosion resistance enhancing layers (204) deposited thereon, wherein the method comprises:
- depositing (302; 402) at least one second corrosion resistance enhancing layer (206) on said first corrosion enhancing layers (204), said second corrosion enhancing layer (206) having a SiOxCzHw composition with x, z, w > 0 and a thickness in a range 1-500 nm, and wherein said second corrosion enhancing layer (206) is deposited by means of plasma assisted chemical vapor deposition, "PA CVD", with hexamethyldisiloxane, "HMDSO", being used as process gas.

2. The method as claimed in claim 1, wherein the process gas contains an oxygen, "O2", to HDMSO ratio that is less than 6 to1.

3. The method as claimed in any one of claims 1-2, wherein the metal substrate material is stainless steel.

4. The method as claimed in any one of claims 1-3, wherein said first corrosion resistance enhancing layers (204) comprise two first corrosion resistance enhancing layers deposited on the two major surfaces of the core layer, respectively, and said at least one second corrosion resistance enhancing layer comprises two corrosion resistance enhancing layers deposited on said two first corrosion resistance enhancing layers, respectively.

5. The method as claimed in any one of claims 1-4, wherein the method further comprises:
- forming (301; 401), prior to the deposition of the second corrosion enhancing layer (206), the BPP sheet (200) from a sheet of said metal substrate material with said one or more first corrosion resistance enhancing layers (204) deposited thereon.

6. Fuel cell bipolar plate, "BPP", sheet (200) obtainable by the method of any of claims 1 to 5 and having a core layer (201) made from a metal substrate material and having one or more first corrosion resistance enhancing layers (204) deposited thereon, wherein at least one second corrosion resistance enhancing layer (206) is deposited on said first corrosion enhancing layers (204), said second corrosion enhancing layer (206) having a SiOxCzHw composition with x, z, w > 0 and a thickness in a range 1-500 nm.

7. The fuel cell BPP sheet as claimed in claim 6, wherein the metal substrate material is stainless steel.

8. The fuel cell BPP sheet as claimed in any one of claims 6-7, wherein said first corrosion resistance enhancing layers (204) comprise two first corrosion resistance enhancing layers deposited on the two major surfaces of the core layer, respectively, and said at least one second corrosion resistance enhancing layer comprises two corrosion resistance enhancing layers deposited on said two first corrosion resistance enhancing layers, respectively.

9. Arrangement (500) for enhancing corrosion resistance of a fuel cell bipolar plate, "BPP", sheet (200) according to any of claims 6 to 8 and having a core layer (201) made from a metal substrate material and having one or more first corrosion resistance enhancing layers (204) deposited thereon, wherein the arrangement is configured to deposit (302; 402) at least one second corrosion resistance enhancing layer (206) on said first corrosion enhancing layers (204), by means of plasma assisted chemical vapor deposition, "PA CVD", with hexamethyldisiloxane, "HMDSO" used as process gas, such that said second corrosion enhancing layer (206) will have a SiOxCzHw composition with x, z, w > 0 and a thickness in a range 1-500 nm.

10. The arrangement (500) as claimed in claim 9, wherein the process gas contains an oxygen, "O2", to HDMSO ratio that is less than 6 to1.

11. The arrangement (500) as claimed in any one of claims 9-10, wherein the metal substrate material is stainless steel.

12. The arrangement (500) as claimed in any one of claims 9-11, wherein said first corrosion resistance enhancing layers (204) comprise two first corrosion resistance enhancing layers deposited on the two major surfaces of the core layer, respectively, and said at least one second corrosion resistance enhancing layer comprises two corrosion resistance enhancing layers deposited on said two first corrosion resistance enhancing layers, respectively.

13. The arrangement (500) as claimed in any one of claims 9-12, wherein the arrangement (500) is further configured to form (301; 401), prior to the deposition of the second corrosion enhancing layer (206), the BPP sheet (200) from a sheet of said metal substrate material with said one or more first corrosion resistance enhancing layers (204) deposited thereon.

## Patentansprüche

1. Verfahren zur Verbesserung der Korrosionsbeständigkeit eines bipolaren Brennstoffzellenplatten-, "BPP", -blechs (200), das eine Kernschicht (202) aufweist, die aus einem Metallsubstratmaterial hergestellt ist und auf der eine oder mehrere erste die Korrosionsbeständigkeit verbessernde Schichten (204) aufgebracht sind, wobei das Verfahren Folgendes umfasst:
- Aufbringen (302; 402) mindestens einer zweiten die Korrosionsbeständigkeit verbessernden Schicht (206) auf die ersten die Korrosionsbeständigkeit verbessernden Schichten (204), wobei die zweite die Korrosionsbeständigkeit verbessernde Schicht (206) eine SiOxCzHw-Zusammensetzung mit x, z, w > 0 und eine Dicke in einem Bereich von 1-500 nm aufweist, und wobei die zweite die Korrosionsbeständigkeit verbessernde Schicht (206) mittels plasmaunterstützter chemischer Gasphasenabscheidung, "PA CVD", aufgebracht wird, wobei Hexamethyldisiloxan, "HMDSO", als Prozessgas verwendet wird.

2. Verfahren nach Anspruch 1, wobei das Prozessgas ein Verhältnis von Sauerstoff, "O2", zu HDMSO enthält, das weniger als 6 zu 1 beträgt.

3. Verfahren nach einem der Ansprüche 1 bis 2, wobei das Metallsubstrat rostfreier Stahl ist.

4. Verfahren nach einem der Ansprüche 1 bis 3, wobei die ersten die Korrosionsbeständigkeit verbessernden Schichten (204) zwei erste die Korrosionsbeständigkeit verbessernde Schichten umfassen, die jeweils auf den beiden Hauptoberflächen der Kernschicht aufgebracht sind, und die mindestens eine zweite die Korrosionsbeständigkeit verbessernde Schicht zwei die Korrosionsbeständigkeit verbessernde Schichten umfasst, die jeweils auf den beiden ersten die Korrosionsbeständigkeit verbessernden Schichten aufgebracht sind.

5. Verfahren nach einem der Ansprüche 1 bis **4,** wobei das Verfahren weiter Folgendes umfasst:
- Bilden (301; 401) des BPP-Blechs (200) aus einem Blech des Metallsubstratmaterials mit der einen oder den mehreren ersten die Korrosionsbeständigkeit verbessernden Schichten (204), die darauf aufgebracht sind, vor dem Aufbringen der zweiten die Korrosionsbeständigkeit verbessernden Schicht (206).

6. Bipolares Brennstoffzellenplatten-, "BPP", -blech (200), das durch das Verfahren nach einem der Ansprüche 1 bis 5 erhältlich ist und eine Kernschicht (201) aufweist, die aus einem Metallsubstratmaterial hergestellt ist und auf der eine oder mehrere erste die Korrosionsbeständigkeit verbessernde Schichten (204) aufgebracht sind, wobei mindestens eine zweite die Korrosionsbeständigkeit verbessernde Schicht (206) auf den ersten die Korrosionsbeständigkeit verbessernden Schichten (204) aufgebracht ist, wobei die zweite die Korrosionsbeständigkeit verbessernde Schicht (206) eine SiOxCzHw-Zusammensetzung mit x, z, w > 0 und eine Dicke in einem Bereich von 1-500 nm aufweist.

7. Bipolares Brennstoffzellenplattenblech nach Anspruch 6, wobei das Metallsubstrat rostfreier Stahl ist.

8. Bipolares Brennstoffzellenplattenblech nach einem der Ansprüche 6 bis 7, wobei die ersten die Korrosionsbeständigkeit verbessernden Schichten (204) zwei erste die Korrosionsbeständigkeit verbessernde Schichten umfassen, die jeweils auf den beiden Hauptoberflächen der Kernschicht aufgebracht sind, und die mindestens eine zweite die Korrosionsbeständigkeit verbessernde Schicht zwei die Korrosionsbeständigkeit verbessernde Schichten umfasst, die jeweils auf den beiden ersten die Korrosionsbeständigkeit verbessernden Schichten aufgebracht sind.

9. Anordnung (500) zur Verbesserung der Korrosionsbeständigkeit eines bipolaren Brennstoffzellenplatten-, "BPP", -blechs (200) nach einem der Ansprüche 6 bis 8, das eine Kernschicht (201) aufweist, die aus einem Metallsubstratmaterial hergestellt ist und auf der eine oder mehrere erste die Korrosionsbeständigkeit verbessernde Schichten (204) aufgebracht sind, wobei die Anordnung zu Folgendem konfiguriert ist:
Aufbringen (302; 402) mindestens einer zweiten die Korrosionsbeständigkeit verbessernden Schicht (206) auf die ersten die Korrosionsbeständigkeit verbessernden Schichten (204) mittels plasmaunterstützter chemischer Gasphasenabscheidung, "PA CVD", wobei Hexamethyldisiloxan, "HMDSO", als Prozessgas verwendet wird, sodass die zweite die Korrosionsbeständigkeit verbessernde Schicht (206) eine SiOxCzHw-Zusammensetzung mit x, z, w > 0 und eine Dicke im Bereich von 1-500 nm aufweist.

10. Anordnung (500) nach Anspruch 9, wobei das Prozessgas ein Verhältnis von Sauerstoff, "O2", zu HDMSO enthält, das weniger als 6 zu 1 beträgt.

11. Anordnung (500) nach einem der Ansprüche 9 bis 10, wobei das Metallsubstrat rostfreier Stahl ist.

12. Anordnung (500) nach einem der Ansprüche 9 bis 11, wobei die ersten die Korrosionsbeständigkeit verbessernden Schichten (204) zwei erste die Korrosionsbeständigkeit verbessernde Schichten umfassen, die jeweils auf den beiden Hauptoberflächen der Kernschicht aufgebracht sind, und die mindestens eine zweite die Korrosionsbeständigkeit verbessernde Schicht zwei die Korrosionsbeständigkeit verbessernde Schichten umfasst, die jeweils auf den beiden ersten die Korrosionsbeständigkeit verbessernden Schichten aufgebracht sind.

13. Anordnung (500) nach einem der Ansprüche 9 bis 12, wobei die Anordnung (500) weiter so konfiguriert ist, dass sie vor der Aufbringung der zweiten die Korrosionsbeständigkeit verbessernden Schicht (206) das BPP-Blech (200) aus einem Blech des Metallsubstratmaterials mit der einen oder mehreren ersten die Korrosionsbeständigkeit verbessernden Schichten (204), die darauf aufgebracht sind, bildet (301; 401).

## Revendications

1. Procédé de renforcement de la résistance à la corrosion d'une feuille (200) à plaque bipolaire, "BPP", de pile à combustible présentant une couche noyau (202) fabriquée à partir d'un matériau de substrat métallique et présentant une ou plusieurs premières couches (204) de renforcement de la résistance à la corrosion déposées sur celle-ci, dans lequel le procédé comprend :
- le dépôt (302 ; 402) d'au moins une deuxième couche (206) de renforcement de la résistance à la corrosion sur lesdites premières couches (204) de renforcement de la corrosion, ladite deuxième couche (206) de renforcement de la corrosion présentant une composition de SiOxCzHw avec x, z, w > 0 et une épaisseur dans une plage de 1 à 500 nm, et dans lequel ladite deuxième couche (206) de renforcement de la corrosion est déposée au moyen d'un dépôt chimique en phase vapeur assisté par plasma, "PA CVD", avec de l'hexaméthyldisiloxane, "HMDSO", étant utilisé en tant que gaz de traitement.

2. Procédé selon la revendication 1, dans lequel le gaz de traitement contient un rapport oxygène, "O2", sur HDMSO qui est inférieur à 6 sur 1.

3. Procédé selon l'une quelconque des revendications 1 et 2, dans lequel le matériau de substrat métallique est de l'acier inoxydable.

4. Procédé selon l'une quelconque des revendications 1 à 3, dans lequel lesdites premières couches (204) de renforcement de la résistance à la corrosion comprennent deux premières couches de renforcement de la résistance à la corrosion déposées sur les deux surfaces principales de la couche noyau, respectivement, et ladite au moins une deuxième couche de renforcement de la résistance à la corrosion comprend deux couches de renforcement de la résistance à la corrosion déposées sur lesdites deux premières couches de renforcement de la résistance à la corrosion, respectivement.

5. Procédé selon l'une quelconque des revendications 1 à **4,** dans lequel le procédé comprend en outre :
- la formation (301 ; 401), avant le dépôt de la deuxième couche (206) de renforcement de la corrosion, de la feuille (200) BPP à partir d'une feuille dudit matériau de substrat métallique avec lesdites une ou plusieurs premières couches (204) de renforcement de la résistance à la corrosion déposées sur celle-ci.

6. Feuille (200) à plaque bipolaire, "BBP", de pile à combustible pouvant être obtenue par le procédé selon l'une quelconque des revendications 1 à 5 et présentant une couche noyau (201) fabriquée à partir d'un matériau de substrat métallique et présentant une ou plusieurs premières couches (204) de renforcement de la résistance à la corrosion déposées sur celle-ci, dans lequel au moins une deuxième couche (206) de renforcement de la résistance à la corrosion est déposée sur lesdites premières couches (204) de renforcement de la corrosion, ladite deuxième couche (206) de renforcement de la corrosion présentant une composition de SiOxCzHw avec x, z, w > 0 et une épaisseur dans une plage de 1 à 500 nm.

7. Feuille BPP de pile à combustible selon la revendication 6, dans laquelle le matériau de substrat métallique est de l'acier inoxydable.

8. Feuille BPP de pile à combustible selon l'une quelconque des revendications 6 à 7, dans laquelle lesdites premières couches (204) de renforcement de la résistance à la corrosion comprennent deux premières couches de renforcement de la résistance à la corrosion déposées sur les deux surfaces principales de la couche noyau, respectivement, et ladite au moins une deuxième couche de renforcement de la résistance à la corrosion comprend deux couches de renforcement de la résistance à la corrosion déposées sur lesdites deux premières couches de renforcement de la résistance à la corrosion, respectivement.

9. Agencement (500) de renforcement de la résistance à la corrosion d'une feuille (200) à plaque bipolaire, "BPP", de pile à combustible selon l'une quelconque des revendications 6 à 8 et présentant une couche noyau (201) fabriquée à partir d'un matériau de substrat métallique et présentant une ou plusieurs premières couches (204) de renforcement de la résistance à la corrosion déposées sur celle-ci, dans lequel l'agencement est configuré pour déposer (302 ; 402) au moins une deuxième couche (206) de renforcement de la résistance à la corrosion sur lesdites premières couches (204) de renforcement à la corrosion, au moyen d'un dépôt chimique en phase vapeur assisté par plasma, "PA CVD", avec de l'hexaméthyldisiloxane, "HMDSO", étant utilisé en tant que gaz de traitement, de telle sorte que ladite deuxième couche (206) de renforcement de la corrosion présentera une composition de SiOxCzHw avec x, z, w > 0 et une épaisseur dans une plage de 1 à 500 nm.

10. Agencement (500) selon la revendication 9, dans lequel le gaz de traitement contient un rapport oxygène, "O2", sur HDMSO qui est inférieur à 6 sur 1.

11. Agencement (500) selon l'une quelconque des revendications 9 à 10, dans lequel le matériau de substrat métallique est de l'acier inoxydable.

12. Agencement (500) selon l'une quelconque des revendications 9 à 11, dans lequel lesdites premières couches (204) de renforcement de la résistance à la corrosion comprennent deux premières couches de renforcement de la résistance à la corrosion déposées sur les deux surfaces principales de la couche noyau, respectivement, et ladite au moins une deuxième couche de renforcement de la résistance à la corrosion comprend deux couches de renforcement de la résistance à la corrosion déposées sur lesdites deux premières couches de renforcement de la résistance à la corrosion, respectivement.

13. Agencement (500) selon l'une quelconque des revendications 9 à 12, dans lequel l'agencement (500) est en outre configuré pour former (301 ; 401), avant le dépôt de la deuxième couche (206) de renforcement de la corrosion, la feuille (200) BPP à partir d'une feuille dudit matériau de substrat métallique avec lesdites une ou plusieurs premières couches (204) de renforcement de la résistance à la corrosion déposées sur celle-ci.
